(19) Europäisches Patentamt
European Patent Office
Office européen des brevets

(11) **EP 3 657 476 A1**

(12) **EUROPEAN PATENT APPLICATION**
published in accordance with Art. 153(4) EPC

(43) Date of publication:
**27.05.2020 Bulletin 2020/22**

(21) Application number: **18835007.8**

(22) Date of filing: **24.05.2018**

(51) Int Cl.:
*G09F 9/00* (2006.01)     *G02B 5/02* (2006.01)
*G02F 1/1335* (2006.01)

(86) International application number:
**PCT/JP2018/020065**

(87) International publication number:
**WO 2019/017072 (24.01.2019 Gazette 2019/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.07.2017 JP 2017142187**

(71) Applicant: **AGC Inc.**
**Chiyoda-ku**
**Tokyo 100-8405 (JP)**

(72) Inventors:
• **MITARAI, Kazuhiko**
  **Tokyo 100-8405 (JP)**
• **MORIMOTO, Tamotsu**
  **Tokyo 100-8405 (JP)**
• **NISHIKAWA, Yasuhisa**
  **Tokyo 100-8405 (JP)**

(74) Representative: **Müller-Boré & Partner**
**Patentanwälte PartG mbB**
**Friedenheimer Brücke 21**
**80639 München (DE)**

(54) **FRONT PANEL FOR DISPLAY DEVICE**

(57)     A front plate for a display apparatus includes a support body (110) that is transparent and that has first and second surfaces (112, 114), a low reflective layer (120) disposed on a same side as the first surface of the support body, and an antiglare layer (130) disposed on a same side as the second surface of the support body, wherein the antiglare layer includes particles (134) having an average diameter of 1 μm to 10 μm dispersed in a resin matrix (132).

FIG.4

**Description**

TECHNICAL FIELD

The invention relates to a front plate for a display apparatus such as a liquid crystal display.

BACKGROUND ART

A front plate is provided in front of a display apparatus such as a liquid crystal display to protect the display apparatus.

However, when a user tries to visually recognize a display image through the front plate by the display apparatus, a reflection of ambient view sometimes occurs. In particular, in a vehicle-mounted display apparatus, such a reflection of ambient view may cause problems in driving and is desired to be reduced as much as possible.

Therefore, in order to reduce such a reflection of ambient view, a so-called antiglare front plate, i.e., a front plate having an uneven surface, has recently been proposed.

SUMMARY OF THE INVENTION

[Technical Problem]

For the above reasons, the antiglare treatment is often applied to recent front plates for display apparatuses.

However, in general, the effect of antiglare (that is, prevention of reflection of ambient light) and the clearness of the display image are in a trade-off relationship. Therefore, in a case where the front plate is antiglare-treated, the display image displayed through the front plate by the display apparatus tends to become unclear. For this reason, the conventional front plate has a problem in that the effect of antiglare (that is, prevention of reflection of ambient view) cannot be greatly enhanced.

The present invention has been made in view of such a background, and it is an object of the present invention to provide a front plate for a display apparatus that has at least one of a high degree of clearness of a display image and a high anti-glare effect, which have not been obtained to date.

[Solution to Problem]

The present invention provides a front plate for a display apparatus including:

a support body that is transparent and that has first and second surfaces;
a low reflective layer disposed on a same side as the first surface of the support body; and
an antiglare layer disposed on a same side as the second surface of the support body,
wherein the antiglare layer includes particles having an average diameter of 1 $\mu$m to 10 $\mu$m dispersed in a resin matrix.

The front plate is arranged in front of the display apparatus so that the low reflective layer faces the display apparatus.

[Effect of Invention]

According to the present invention, a front plate for a display apparatus that has at least one of a high degree of clearness of a display image and a high anti-glare effect, which have not been obtained to date, can be provided.

BRIEF DESCRIPTION OF THE DRAWINGS

FIG. 1 is a drawing schematically illustrating an example of a measuring apparatus used for evaluating a clarity T of a front plate;
FIG. 2 is a drawing schematically illustrating an example of a measuring apparatus used for evaluating a diffusion R of a front plate;
FIG. 3 is a graph schematically illustrating a relationship between the clarity T and the diffusion R of a conventional front plate;
FIG. 4 is a drawing schematically illustrating a cross section of a front plate according to an embodiment of the present invention;

FIG. 5 is a drawing schematically illustrating a cross section of a front plate according to another embodiment of the present invention;

FIG. 6 is a drawing schematically illustrating a cross section of a front plate according to still another embodiment of the present invention;

FIG. 7 is a figure schematically illustrating a flow of an example of a method for manufacturing a front plate according to an embodiment of the present invention; and

FIG. 8 is a graph illustrating a relationship between the clarity T and the diffusion R obtained from each sample.

## MODES FOR CARRYING OUT THE INVENTION

Hereinafter, embodiments of the present invention will be described.

(Clarity T and diffusion R)

First, in order to more clearly understand features of front plates according to the embodiments of the present invention, the indexes of a clarity T and a diffusion R will be explained.

The clarity T is an index relating to the clearness of a display image displayed through a front plate by a display apparatus. The greater the clarity T is, the higher the clearness of the display image is. The minimum value of the clarity T is 0 and the maximum value is 1.

The diffusion R is an index relating to the degree indicating how much a reflection of ambient view on the front plate is reduced, i.e., the antiglare effect. The higher the diffusion R is, the higher the antiglare effect is, and the more greatly the reflection of ambient view is reduced. The minimum value of the diffusion R is 0, and the maximum value is 1.

(Method for evaluating clarity T)

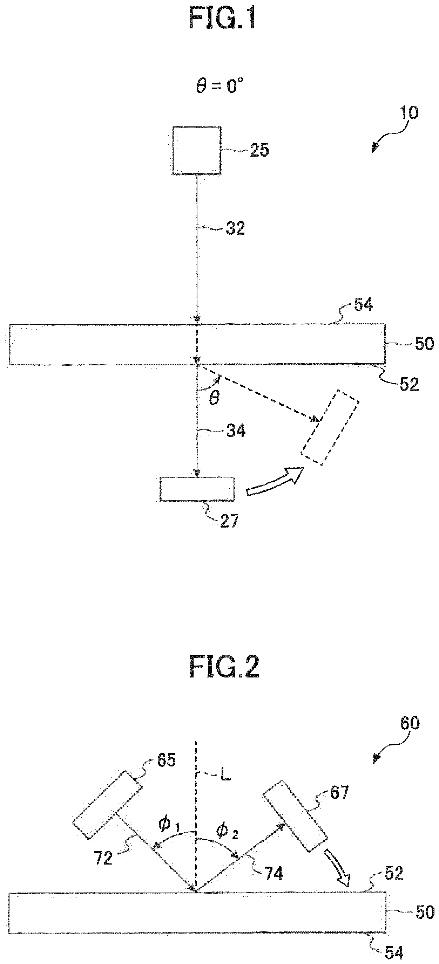

A method for evaluating the clarity T will be explained with reference to FIG. 1.

FIG. 1 is a drawing schematically illustrating an example of a measuring apparatus used for evaluating the clarity T.

As illustrated in FIG. 1, a measuring apparatus 10 includes a light source 25 and a detector 27. In the measuring apparatus 10, a sample to be measured (i.e., front plate) 50 is placed. The sample 50 includes a first surface 52 and a second surface 54. The light source 25 emits first light 32 toward the sample 50. The detector 27 receives the transmitted light 34 emitted from the sample 50 and measures its luminance.

The sample 50 is arranged so that the second surface 54 faces the light source 25 and the first surface 52 faces the detector 27.

When one of the surfaces of the sample 50 is antiglare-treated, this antiglare-treated surface serves as the first surface 52 of the sample 50. That is, in this case, the sample 50 is arranged in the measuring apparatus 10 with the antiglare-treated surface facing the detector 27.

During measurement, the first light 32 is emitted from the light source 25 toward the sample 50. The first light 32 is emitted in a direction substantially parallel to a normal to the second surface 54 (and to a normal to the first surface 52) of the sample 50. Hereinafter, this angle θ is defined as a direction of zero-degrees. Since the actual measurement includes errors, the angle θ more precisely includes a range of zero-degrees ± 0.5 degrees.

Next, the luminance of the transmitted light 34 (hereinafter also referred to as "zero-degrees transmitted light") transmitted from the first surface 52 of the sample 50 at an angle θ of 0 degrees is measured using the detector 27.

Next, a similar operation is performed while the angle θ at which the detector 27 receives the transmitted light 34 is changed in the range of -90 degrees to +90 degrees. Here, a minus (-) sign indicates that the angle θ is inclined counterclockwise with respect to the normal to the first surface 52, and a plus (+) sign indicates that the angle θ is inclined clockwise with respect to the normal to the first surface 52.

As a result, the luminance of the transmitted light (hereinafter also referred to as "total transmitted light") transmitting through the sample 50 and emitted from the first surface 52 at an angle θ=-90 degrees to +90 degrees is measured using the detector 27.

Subsequently, the clarity T is calculated from the following expression (1).

$$\text{Clarity } T = (\text{luminance of zero-degrees transmitted light}) / (\text{luminance of total transmitted light}) \ldots \text{Expression (1)}$$

It has been confirmed that the clarity T obtained by such a measurement is correlated with a result of visual judgement on the clearness of the image by observers, and exhibits a behavior similar to human visual perception. For example, a front plate of which clarity T is a large value (close to 1) has a high degree of clearness, whereas a front plate of which clarity T is a small value (close to 0) has a low clearness. Therefore, this clarity T can be used as a quantitative index for determining a clearness of a display image viewed through the front plate.

The clarity T explained above can be easily evaluated by using a commercially available goniometer.

(Method for evaluating diffusion R)

Next, a method for evaluating the diffusion R will be explained with reference to FIG. 2.

FIG. 2 schematically illustrates an example of a measuring apparatus used for measuring the diffusion R.

As illustrated in FIG. 2, the measuring apparatus 60 includes a light source 65 and a detector 67. A sample (i.e., a front plate) 50 is placed in the measuring apparatus 60. The sample 50 has a first surface 52 and a second surface 54. The light source 65 emits second light 72 toward the sample 50. The detector 67 receives the reflected light 74 reflected from the sample 50 at a predetermined angle (referred to as $\varphi 2$) and measures its luminance.

The sample 50 is arranged so that the first surface 52 faces the light source 65 and detector 67. Therefore, the light measured by the detector 67 is reflected light 74 reflected by the first surface 52. When one of the surfaces of the sample 50 is antiglare-treated, this antiglare surface is the first surface 52 of the sample 50. That is, in this case, the sample 50 is arranged in the measuring apparatus 60 so that the antiglare-treated surface faces the light source 65 and the detector 67.

During measurement, the second light 72 is emitted from the light source 65 of the measuring apparatus 60 toward the sample 50. The second light 72 is emitted at an angle $\varphi 1$ inclined by 45 degrees with respect to the normal L to the sample 50. In this application, in view of error of the measuring apparatus 20, a range of 45 degrees $\pm 0.5$ degrees is defined as 45 degrees. That is, $\varphi 1 = 45$ degrees represents 45 degrees $\pm 0.5$ degrees.

The second light 72 is reflected by the first surface 52 of the sample 50. The detector 67 detects 45 degrees specular reflection light of this reflected light 74, and measures its luminance to obtain a "luminance of 45 degrees specular reflected light".

Next, a similar operation is performed while the angle $\varphi 2$ at which the reflected light 74 is reflected by the first surface 52 and received by the detector 67 is changed in a range of 0 degrees to +90 degrees. At this time, the detector 67 measures and adds luminance distributions of the reflected light 74 reflected from the first surface 52 of the sample 50 and emitted from the first surface 52, and adopts the summation of the luminance distributions as a "luminance of the total reflection light".

A diffusion R is calculated using the following expression (2) from the luminance of the 45 degrees specular reflection light and the luminance of the total reflection light thus obtained.

```
diffusion R = (luminance of total reflection
light - luminance of 45 degrees specular reflection
light) / (luminance of total reflection light)
Expression (2)
```

It has been confirmed that the diffusion R is correlated with a result of visual judgement on the antiglare effect by observers, and exhibits a behavior similar to human visual perception. For example, a front plate of which diffusion R is a large value (close to 1) has a high antiglare effect, whereas a front plate of which diffusion R is a small value (close to 0) has a low antiglare effect. Therefore, this diffusion R can be used as a quantitative index for determining reduction of glare of the front plate.

Such a measurement can be easily performed by using a commercially available goniometer.

Here, as described above, in a case where the front plate is antiglare-treated, the display image displayed through the front plate tends to become unclear. For this reason, the conventional front plate has a problem in that the effect of antiglare (i.e., anti-reflection of ambient view) effect cannot be greatly enhanced.

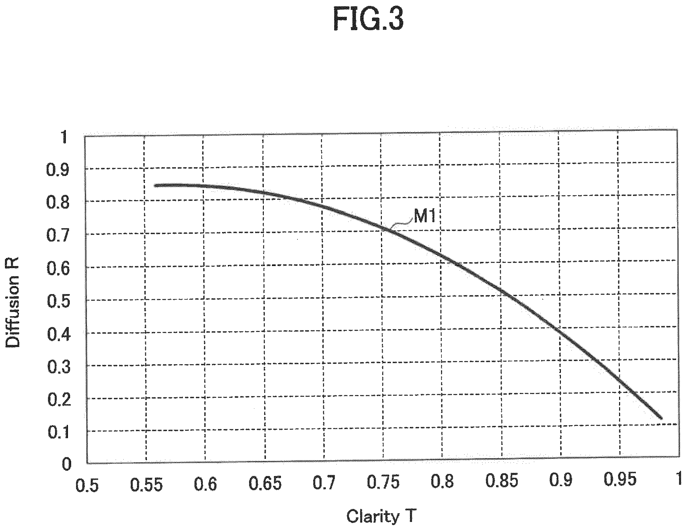

FIG. 3 is a graph schematically illustrating a relationship between the clarity T and the diffusion R of a conventional front plate.

From FIG. 3, it can be understood that the relationship between clarity T and diffusion R in the conventional front plate is represented by an arc-shaped curve M1 that descends to the right. For example, in the conventional front plate, in order to ensure a clearness attaining the clarity T of about 0.8, it is necessary to reduce the diffusion R to about 0.6 or less. Originally, the diffusion R is desired be as close to 1 as possible, but in this case, the clarity T greatly decreases from 1 and the clearness of the display image is impaired.

Thus, in the conventional front plate, the relationship between the clarity T and the diffusion R is to be selected from a region on the curve M1 or a region below the curve M1 (hereinafter these regions are collectively referred to as a "conventional region").

In contrast, in the front plate according to the embodiment of the present invention, as will be explained later, the relationship between the clarity T and the diffusion R may be moved to a region above the curve M1 (hereinafter such a region will be referred to as an "improved region").

Therefore, an embodiment of the present invention can provide a front plate having one of a high degree of clearness of a display image and a high anti-glare effect, which has not been obtained to date.

(Front plate according to embodiment of the present invention)

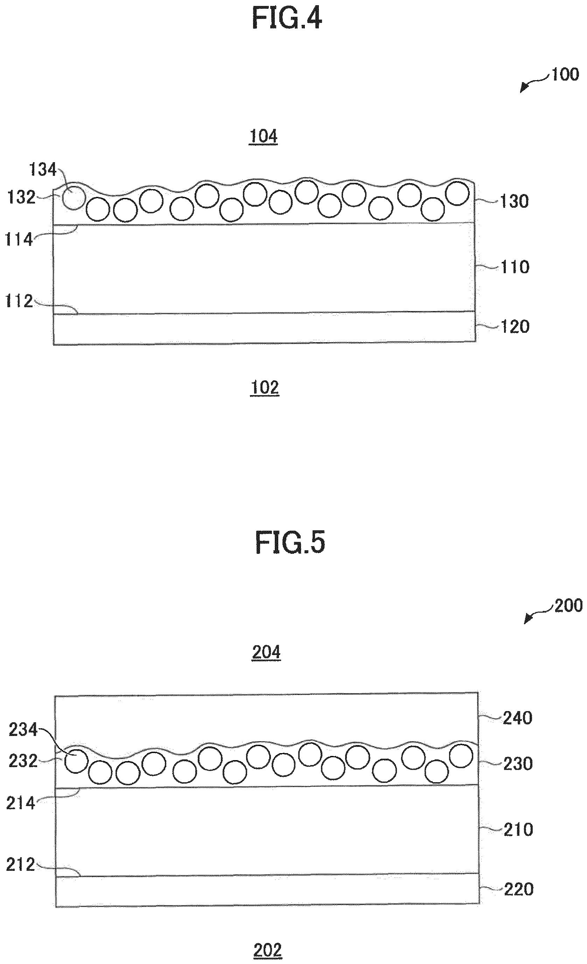

Next, an example of a configuration of a front plate according to an embodiment of the present invention will be explained with reference to FIG. 4.

FIG. 4 schematically illustrates a cross section of a front plate (hereinafter referred to as a "first front plate") 100 according to the embodiment of the present invention.

As illustrated in FIG. 4, the first front plate 100 includes a first side 102 and a second side 104. The first front plate 100 includes a support body 110, a low reflective layer 120, and an antiglare layer 130.

The support body 110 includes a first surface 112 and a second surface 114. The low reflective layer 120 is disposed on the first surface 112 of the support body 110, and the antiglare layer 130 is disposed on the second surface 114 of the support body 110. Accordingly, the low reflective layer 120 corresponds to the first side 102 of the first front plate 100, and the antiglare layer 130 corresponds to the second side 104 of the first front plate 100.

The low reflective layer 120 has a function of reducing reflection of light entering from the first side 102 of the first front plate 100. In this application, "low reflection" means that the visible light reflectance is 1% or less. Therefore, the low reflective layer 120 represents a layer that can reduce the reflectance of visible light to 1% or less.

The antiglare layer 130 has a function of reducing reflection of ambient view when the first front plate 100 is viewed from the second side 104.

The antiglare layer 130 has a matrix 132 made of resin and particles 134 dispersed in the matrix. The particles 134 are substantially spherical and have an average diameter in a range of 1 $\mu$m to 10 $\mu$m, for example.

In the present application, the average diameter of particles contained in the antiglare layer is measured according to the following method:

(i) first, an optical microscope (L300N;
manufactured by Nikon) is used to capture a surface image of an object to be observed (antiglare layer) at 100x magnification under transmission and differential interference conditions.
(ii) The color of the captured image is reversed, and "circular figure extraction" function of image processing software (WinROOF by Mitani Corporation) is used to extract circular particles contained in the image.
(iii) The diameters of all the extracted particles are measured with "circular figure measurement".
(iv) An "average diameter" of the particles is obtained by averaging all of the measured diameters.

In the first front plate 100 configured as described above, the clarity T and diffusion R are higher than the conventional front plate. That is, in the first front plate 100, the relationship between the clarity T and the diffusion R can be shifted to the upper right region, i.e., the improved region, from the curve M1 in the graph illustrated in FIG. 3.

With the first front plate 100, at least one of a high degree of clearness of a display image and a high anti-glare effect, which have not been obtained to date, can be obtained. The first front plate 100 is arranged in front of the display apparatus so that the low reflective layer 120 of the first front plate 100 faces the display apparatus.

At present, the reason why the relationship between the clarity T and the diffusion R in the first front plate 100 is shifted to the improved region is not fully understood.

For example, the first front plate 100 is provided with the low reflective layer 120 on the first side 102, and this low reflective layer 120 may contribute to improving the characteristics of the front plate. However, with a conventional front plate that is antiglare-treated with an uneven surface, the effect of improving the diffusion R as seen in the first front plate 100 is not appreciably obtained even if a low reflective layer is simply provided on a non-antiglare-treated surface of such a conventional front plate.

At present, in the first front plate 100, it can be inferred that some changes in the optical characteristics occur due to the synergistic effect of the antiglare layer 130 in which the particles 134 are dispersed in the matrix 132 and the low reflective layer 120.

(Front plate according to another embodiment of the present invention)

Next, an example of a configuration of a front plate according to another embodiment of the present invention will be explained with reference to FIG. 5.

FIG. 5 schematically illustrates a cross section of a front plate (hereinafter referred to as "second front plate") 200 according to the another embodiment of the present invention.

As illustrated in FIG. 5, the second front plate 200 includes a first side 202 and a second side 204. The second front plate 200 includes a support body 210, a low reflective layer 220, an antiglare layer 230, and a second low reflective layer 240.

The support body 210 includes a first surface 212 and a second surface 214. The low reflective layer 220 is disposed on the first surface 212 of the support body 210. The antiglare layer 230 is disposed on the second surface 214 of the support body 210. A second low reflective layer 240 is disposed on a surface of the antiglare layer 230 facing away from the support body 210.

Therefore, the low reflective layer 220 corresponds to the first side 202 of the second front plate 200, and the second low reflective layer 240 corresponds to the second side 204 of the second front plate 200.

The antiglare layer 230 is made by dispersing particles 234 in a matrix 232 made of resin.

The structure and the function of the support body 210, the low reflective layer 220, and the antiglare layer 230 are similar to those of the first front plate 100 described above. Therefore, no further explanation will be given here.

The second low reflective layer 240 is applied to reduce reflection at the second side 204 of the second front plate 200.

In addition, when the second front plate 200 is arranged in front of the display apparatus, there is an effect of improving the aesthetic appearance of the display apparatus as a whole.

That is, in general, when a front plate is arranged in front of a display apparatus having a black peripheral frame, the color difference between the central part and the frame part often becomes conspicuous, which may degrade the appearance of the black frame. However, when the second front plate 200 having the second low reflective layer 240 is arranged in front of the display apparatus, the color difference between the central part and the frame part becomes inconspicuous, which can reduce the deterioration of aesthetics.

Furthermore, when the second low reflective layer 240 is disposed on the front plate, there is an advantage in that the contrast of the display image is improved, and the visibility of the display image is improved.

In the second front plate 200, just like the first front plate 100, the relationship between the clarity T and the diffusion R can be shifted to the upper right region, i.e., the improved region, from the curve M1 in the graph illustrated in FIG. 3 explained above.

Therefore, with the second front plate 200, at least one of a high degree of clearness of a display image and a high anti-glare effect, which have not been obtained to date, can be obtained.

The second front plate 200 is arranged in front of the display apparatus so that the low reflective layer 220 of the second front plate 200 faces the display apparatus.

(Front plate according to still another embodiment of the present invention)

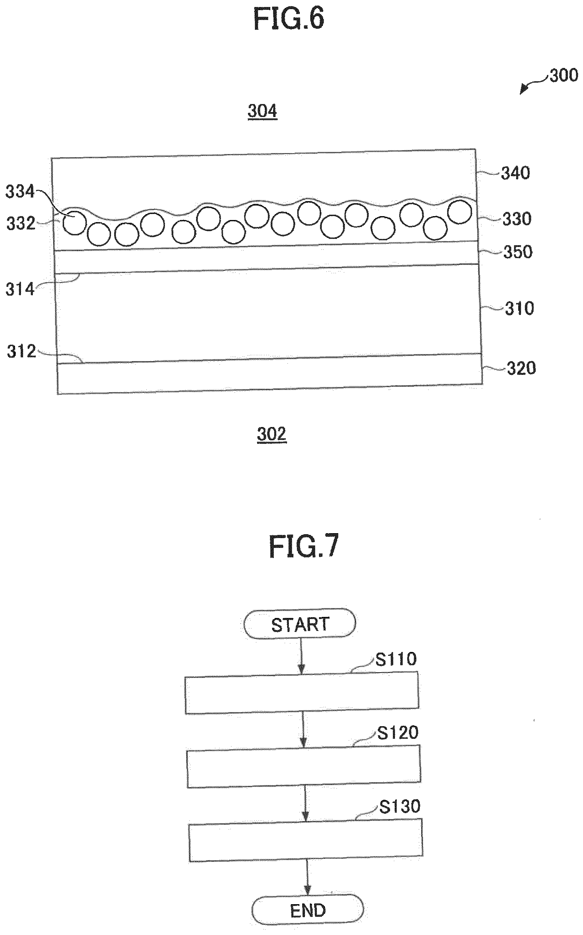

Next, an example of a configuration of a front plate according to still another embodiment of the present invention will be explained with reference to FIG. 6.

FIG. 6 schematically illustrates a cross section of a front plate (hereinafter referred to as "third front plate") 300 according to still another embodiment of the present invention.

As illustrated in FIG. 6, the third front plate 300 includes a first side 302 and a second side 304. The third front plate 300 includes a support body 310, a low reflective layer 320, an antiglare layer 330, and a second low reflective layer 340. However, the second low reflective layer 340 may be omitted.

The support body 310 includes a first surface 312 and a second surface 314. The low reflective layer 320 is disposed on the first surface 312 of the support body 310. The antiglare layer 330 is disposed above the second surface 314 of the support body 310. If the second low reflective layer 340 is present, the second low reflective layer 340 is disposed on a surface of the antiglare layer 330 facing away from the support body 310.

Therefore, the low reflective layer 320 corresponds to the first side 302 of the third front plate 300. In a case where the low reflective layer 320 is present, the second low reflective layer 340 corresponds to the second side 304 of the third front plate 300.

The antiglare layer 330 is made by dispersing particles 334 in a matrix 332 made of resin.

The structure and the function of the support body 310, the low reflective layer 320, and the antiglare layer 330, and, if present, the structure and the function of the second low reflective layer 340 are similar to those of the second front plate 200 explained above. Therefore, no further explanation will be given here.

Furthermore, the third front plate 300 has a layer having a louver function (hereinafter referred to as a "louver layer") 350 on the second surface 314 of the support body 310. Accordingly, the antiglare layer 330 is disposed on the louver layer 350.

Here, the louver layer 350 means a layer that can give an angle dependency in the emission direction when light entering from one of the surfaces is emitted from the other of the surfaces. More specifically, the louver layer 350 has a function of increasing the transmittance of light entering at an angle close to the normal direction and blocking light entering at the angles other than the normal direction.

Therefore, when the louver layer 350 is present in the third front plate 300, the light entering into the third front plate 300 from the surface facing the display apparatus can be appreciably controlled against leaking in a random direction.

A typical liquid crystal display apparatus includes a backlight, a liquid crystal panel, and a louver layer between the backlight and the liquid crystal panel. Among them, the louver layer does not have sufficient heat resistance, and if the light intensity of the backlight is increased too much, the louver layer is deteriorated by heat. For this reason, the backlight is normally used with the amount of light reduced to some extent.

However, when the third front plate 300 having the above-explained configuration is used as such a front plate for a liquid crystal display apparatus, the louver layer inside the liquid crystal display apparatus can be omitted. Therefore, in such a liquid crystal display apparatus, the amount of light from the backlight can be significantly increased, and an image with higher visibility can be output.

In the third front plate 300, just like the first front plate 100 and the second front plate 200, the relationship between the clarity T and the diffusion R can be shifted to the upper right region, i.e., the improved region, from the curve M1 in the graph illustrated in FIG. 3 explained above.

Therefore, with the third front plate 300, one of a high degree of clearness of a display image and a high anti-glare effect, which have not been obtained to date, can be obtained.

The third front plate 300 is arranged in front of the display apparatus so that the low reflective layer 320 of the third front plate 300 faces the display apparatus.

(Features of components constituting front plate according to embodiments of the present invention)

Next, characteristics of members constituting the front plate according to the embodiments of the present invention will be explained in more detail. Here, as an example, each member will be explained using the third front plate 300 illustrated in FIG. 6 as an example. Therefore, the reference numerals illustrated in FIG. 6 are used to represent the respective members. However, it will be apparent to those skilled in the art that the following explanation can also be applied to other front plates according to the embodiments of the present invention, for example, constituent members of the first front plate 100 and the second front plate 200.

(Support body 310 and louver layer 350)

The support body 310 is not particularly limited as long as it is a "transparent" member. The support body 310 may be made of, for example, glass, resin, or plastic. Further, the support body 310 may be colored.

In this application, "transparent" means that the visible light transmittance is 50% or more.

The thickness of the support body 310 is, for example, in a range of 0.2 mm to 1 mm.

In a case where the third front plate 300 is used as a front plate for an in-vehicle display apparatus, an image for displaying driving information such as a speedometer may be printed on one of the first surface 312 and the second surface 314 of the third front plate 300 or the surface (facing the side 302) of the low reflective layer 320.

In this application, it should be noted that "image" is intended to have a broad meaning that includes characters, marks, and the like, in addition to symbols such as figures, photographs, and patterns.

The louver layer 350 may be configured by attaching an optical film to the second surface 314 of the support body 310. Such an optical film may be made of, for example, a resin having micro pillars.

(Low reflective layer 320)

The low reflective layer 320 is configured such that the visible light reflectance is 1% or less.

The low reflective layer 320 has a luminous reflectance of 1% or less. The luminous reflectance is preferably 0.5% or less.

The low reflective layer 320 includes, for example, a multilayer film in which two types of films having different refractive indexes are alternately stacked.

In this case, silicon oxide ($SiO_2$), silicon oxide alloys, and magnesium fluoride ($MgF_2$) may be used as low refractive index films, and titanium oxide ($TiO_2$), niobium oxide ($Nb_2O_5$), and tantalum oxide ($Ta_2O_5$) may be used as high refractive index films.

The thickness of the low reflective layer 320 is, for example, in a range of 100 nm to 500 nm, and preferably in a range of 200 nm to 300 nm.

(Antiglare layer 330)

As described above, the antiglare layer 330 includes the matrix 332 and the particles 334 dispersed in the matrix 332.

The matrix 332 is made of resin. The type of resin is not limited thereto, and examples of resins include urethane-containing acrylic resins and the like.

The particles 334 are preferably substantially spherical, and in this case, the average diameter is, for example, in a range of 1 $\mu$m to 10 $\mu$m. The average diameter is preferably in a range of 2 $\mu$m to 5 $\mu$m.

The material of the particles 334 is not limited thereto, but may be a mineral such as silica or mica, for example. Alternatively, the particles 334 may be made of an acrylic resin different from the matrix 332 or, for example, a urethane resin.

The ratio of the particles 334 included in the matrix 332 is selected based on the optical characteristics desired for the third front plate 300. For example, in a case where it is desired to keep the haze of the third front plate 300 low, a lower particle content is selected. In a case where it is desired to increase the haze of the third front plate 300, a higher particle content is selected.

Therefore, the ratio in weight between the particles 334 and the matrix 332 (particles : matrix) can be arbitrarily changed.

The thickness of the antiglare layer 330 varies depending on the particle size, but is, for example, in a range of 1 $\mu$m to 10 $\mu$m, and preferably in a range of 2 $\mu$m to 5 $\mu$m.

(Second low reflective layer 340)

The second low reflective layer 340 may have one of configurations and materials similar to those of the low reflective layer 320.

The thickness of the second low reflective layer 340 is, for example, in a range of 100 nm to 500 nm.

(Third front plate 300)

The third front plate 300 can be applied to, for example, a front plate for a display apparatus. Such a display apparatus may be, for example, a liquid crystal display or an organic EL display. The display apparatus may be, for example, a mobile device such as a smartphone, an image display apparatus such as a personal computer and a television system, an in-vehicle car navigation system, and the like.

(Method for manufacturing front plate according to embodiment of the present invention)

Next, an example of a method for manufacturing a front plate according to an embodiment of the present invention will be explained. Here, as an example, the manufacturing method will be explained using the first front plate 100 illustrated in FIG. 4 as an example.

FIG. 7 schematically illustrates a flow of a method for manufacturing a front plate (hereinafter referred to as a "first manufacturing method") according to an embodiment of the present invention.

As illustrated in FIG. 7, the first manufacturing method includes:

(1) a step of preparing a support body (step S110) ;
(2) a step of forming a low reflective layer on one of the surfaces (first surface) of the support body (step S120); and
(3) a step of forming an antiglare layer on a surface (second surface) on the opposite surface of the support body (step S130).

Note that step S120 and step S130 may be performed in the reverse order.

Hereinafter, each step will be explained.

(step S110)

First, a support body including first and second surfaces is prepared.

As explained above, the support body may be made of, for example, glass, resin, or plastic. Further, these materials may be colored.

The thickness of the support body is, for example, in a range of 0.2 mm to 1 mm.

If necessary, various images may be printed on one of the first and second surfaces of the support body.

(Step S120)

Next, a low reflective layer is formed on the first surface of the support body. As described above, the low reflective layer may be formed of a multilayer film.

The low reflective layer may be formed on the first surface of the support body using dry deposition techniques such as vapor deposition, sputtering, physical vapor deposition (PVD), or chemical vapor deposition (CVD).

The thickness of the low reflective layer is, for example, in a range of 100 nm to 500 nm.

(Step S130)

Next, an antiglare layer is formed on the second surface of the support body. As described above, the antiglare layer includes a resin matrix and particles dispersed in the resin matrix.

The method for arranging the antiglare layer is not particularly limited. The antiglare layer may be formed by a wet method, for example. Examples of wet methods include a method for preparing a slurry including resin for the matrix and particles and spraying this slurry onto the second surface of the support body, and a method for coating the slurry onto the second surface of the support body manually or using a coater.

Further, in a case where the resin for the matrix is an ultraviolet curable resin or a thermosetting resin, the antiglare layer can be formed by curing the formed slurry by ultraviolet emission or heating.

The thickness of the antiglare layer is in a range of 1 $\mu$m to 10 $\mu$m.

The first front plate 100 can be manufactured according to the above steps.

In the above description, the manufacturing method has been explained using the first front plate 100 as an example. However, it will be apparent to those skilled in the art that similar manufacturing methods can be applied to front plates according to other embodiments of the present invention, such as the second front plate 200 and the third front plate 300.

[Examples]

Next, examples of the present invention will be explained. In the following explanation, Examples 1 to 8 and Examples 31 to 33 are examples. Examples 11 to 18 and Examples 21 to 24 are comparative examples.

(Example 1)

A front plate having a structure illustrated in FIG. 4 was prepared according to the following method.

For the support body, a polycarbonate substrate (Carboglass Polish Gray; manufactured by AGC Polycarbonate) having a thickness of 0.5 mm was used. The visible light transmittance of this substrate was 65%.

An antiglare layer was formed on one of the surfaces (second surface) of this substrate according to the following method.

First, an acrylic resin (hereinafter referred to as "matting agent") including silica fine particles (average particle size was 2 $\mu$m) and an acrylic solvent resin (hereinafter referred to as "clearing agent") including no fine particles were mixed at a ratio of 65:35 by weight to prepare a mixture. Then, propylene glycol monomethyl ether was added to the mixture to dilute the solid content to 15%.

Next, using the bar coater, the obtained coating solution was applied only to the second surface of the substrate. Next, this substrate was placed into a warm air drying oven at 80 degrees Celsius, and held for 20 minutes to dry the coating solution. Thereafter, the coating solution was cured using an ultraviolet exposure machine.

As a result, an antiglare layer was formed on the second surface of the substrate.

According to the same method, an antiglare layer was formed on the surface of the glass plate and the thickness was measured. As a result, the thickness of the antiglare layer was about 2 to 3 $\mu$m. Therefore, in Example 1, the thickness of the antiglare layer formed on the substrate was expected to be about 2 to 3 $\mu$m.

Next, a low reflective layer was formed on the surface (first surface) facing away from the second surface of the substrate according to the following method.

The low reflective layer was deposited using metal mode sputtering.

The sputtering apparatus includes a rotary cylindrical drum holder and an oxidation source installed around the holder. The oxidation source can form microwave plasma by electron cyclotron resonance (ECR).

During the deposition, a substrate was placed on the holder, and a metal target was disposed around the holder.

During the deposition, argon gas was supplied to the metal target to which a voltage was applied, and oxygen gas was supplied to the oxidization source to which a voltage was applied, while the holder was rotated at a high speed in vacuum. Accelerated argon ions hit the metal target and made metal atoms spring out of it, and the metal atoms were deposited on the substrate. Since the substrate was rotated by the holder, the deposited metal atoms were instantly oxidized by the oxygen plasma supplied from the oxidation source when the metal atoms faced the oxidation source.

In the used sputtering apparatus, such actions were repeated, and a thin film of a target metal oxide can be formed on the substrate.

In Example 1, the low reflective layer had a four-layer structure including a first layer to a fourth layer, which include, from the side close to the substrate, titanium oxide ($TiO_2$: first layer), silicon oxide ($SiO_2$: second layer), titanium oxide ($TiO_2$: third layer), and silicon oxide ($SiO_2$: fourth layer).

First, the first layer was deposited under the following conditions.

Target: metal titanium
The amount of argon gas supplied to the target: 3000 sccm
Power supplied to the target: 10 kW
The amount of oxygen gas supplied to the oxidation source: 400 sccm
Power supplied to the oxidation source: 1050 kW

Next, the second layer was deposited under the following conditions.

Target: Metallic silicon
The amount of argon gas supplied to the target: 3000 sccm
Power supplied to the target: 10kW
Oxygen gas supplied to the oxidation source: 750 sccm
Power supplied to the oxidation source: 1050 kW

Next, the third layer was deposited. The deposition conditions were similar to those for the first layer.

Next, the fourth layer was deposited. The deposition conditions were similar to those for the second layer.

As a result, a low reflective layer including the first layer having the thickness of 12 nm, the second layer having the thickness of 33 nm, the third layer having the thickness of 111 nm, and the fourth layer having the thickness of 91 nm were formed.

The front plate (hereinafter referred to as "Sample 1") was manufactured according to the above method.

(Example 2)

A front plate was manufactured according to a method similar to Example 1. However, in this Example 2, a mixture was prepared with a mixing ratio between the matting agent and the clearing agent being 70:30 by weight to form an antiglare layer. The other conditions are similar to those in Example 1.

As a result, a front plate (hereinafter referred to as "Sample 2") was manufactured.

(Example 3)

A front plate was manufactured according to a method similar to Example 1. However, in this Example 3, a mixture was prepared with a mixing ratio between the matting agent and the clearing agent being 75:25 by weight to form an antiglare layer. The other conditions are similar to those in Example 1.

As a result, a front plate (hereinafter referred to as "Sample 3") was manufactured.

(Example 4)

A front plate was manufactured according to a method similar to Example 1. However, in this Example 4, a mixture was prepared with a mixing ratio between the matting agent and the clearing agent being 5:95 by weight to form an antiglare layer. The other conditions are similar to those in Example 1.

As a result, a front plate (hereinafter referred to as "Sample 4") was manufactured.

(Example 5)

A front plate was manufactured according to a method similar to Example 1. However, in this Example 5, a mixture was prepared with a mixing ratio between the matting agent and the clearing agent being 15:85 by weight to form an antiglare layer. The other conditions are similar to those in Example 1.

As a result, a front plate (hereinafter referred to as "Sample 5") was manufactured.

(Example 6)

A front plate was manufactured according to a method similar to Example 1. However, in this Example 6, a mixture was prepared with a mixing ratio between the matting agent and the clearing agent being 30:70 by weight to form an antiglare layer. The other conditions are similar to those in Example 1.

As a result, a front plate (hereinafter referred to as "Sample 6") was manufactured.

(Example 7)

A front plate was manufactured according to a method similar to Example 1. However, in this Example 7, the antiglare layer was formed according to the following method.

First, an acrylic resin (hereinafter referred to as "second matting agent") including resin fine particles (average particle size was 2.4 $\mu$m) and an acrylic solvent resin (hereinafter referred to as "second clearing agent") including no resin fine particles were mixed at a ratio of 60:40 by weight to prepare a mixture. Further, propylene glycol monomethyl ether was added to the mixture.

Next, using the bar coater, the obtained coating solution was applied only to the second surface of the substrate. The film thickness was 2 to 3 $\mu$m.

Next, this substrate was placed into a warm air drying oven at 80 degrees Celsius, and held for 20 minutes to dry the coating solution. Thereafter, the coating solution was cured using an ultraviolet exposure machine. As a result, an antiglare layer was formed on the second surface of the substrate.

According to the above method, a front plate (hereinafter referred to as "Sample 7") was manufactured.

(Example 8)

A front plate was manufactured according to a method similar to Example 1. However, in this Example 8, the antiglare layer was formed according to the following method.

First, an acrylic resin (hereinafter referred to as "second matting agent") including resin fine particles (average particle size was 8.36 $\mu$m) and an acrylic solvent resin (hereinafter referred to as "second clearing agent") including no resin fine particles were mixed at a ratio of 7.5:92.5 by weight to prepare a mixture. Further, propylene glycol monomethyl ether was added to the mixture.

Next, using the bar coater, the obtained coating solution was applied only to the second surface of the substrate. The film thickness was 2 to 3 $\mu$m.

Next, this substrate was placed into a warm air drying oven at 80 degrees Celsius, and held for 20 minutes to dry the coating solution. Thereafter, the coating solution was cured using an ultraviolet exposure machine. As a result, an antiglare layer was formed on the second surface of the substrate.

According to the above method, a front plate (hereinafter referred to as "Sample 8") was manufactured.

(Example 11)

A front plate was manufactured by a method similar to Example 1. However, in this Example 11, a low reflective layer was not formed on the second surface of the substrate.

As a result, a front plate (hereinafter referred to as "Sample 11") was manufactured.

(Example 12)

A front plate was manufactured by a method similar to Example 2. However, in this Example 12, a low reflective layer was not formed on the second surface of the substrate.

As a result, a front plate (hereinafter referred to as "Sample 12") was manufactured.

(Example 13)

A front plate was manufactured by a method similar to Example 3. However, in this Example 13, a low reflective layer was not formed on the second surface of the substrate.

As a result, a front plate (hereinafter referred to as "Sample 13") was manufactured.

(Example 14)

A front plate was manufactured by a method similar to Example 4. However, in this Example 14, a low reflective layer was not formed on the second surface of the substrate.
As a result, a front plate (hereinafter referred to as "Sample 14") was manufactured.

(Example 15)

A front plate was manufactured by a method similar to Example 5. However, in this Example 15, a low reflective layer was not formed on the second surface of the substrate.
As a result, a front plate (hereinafter referred to as "Sample 15") was manufactured.

(Example 16)

A front plate was manufactured by a method similar to Example 6. However, in this Example 16, a low reflective layer was not formed on the second surface of the substrate.
As a result, a front plate (hereinafter referred to as "Sample 16") was manufactured.

(Example 17)

A front plate was manufactured by a method similar to Example 7. However, in this Example 17, a low reflective layer was not formed on the second surface of the substrate.
As a result, a front plate (hereinafter referred to as "Sample 17") was manufactured.

(Example 18)

A front plate was manufactured by a method similar to Example 8. However, in this Example 18, a low reflective layer was not formed on the second surface of the substrate.
As a result, a front plate (hereinafter referred to as "Sample 18") was manufactured.

(Example 21)

A commercially available acrylic support body was prepared. One of the surfaces of the support body was antiglare-treated by an embossing method. This support body will be referred to as Sample 21.

(Example 22)

Another commercially available acrylic support body, which was the same as Example 21, was prepared. One of the surfaces of the support body was antiglare-treated by an embossing method. This support body will be referred to as Sample 22.

(Example 23)

A low reflective layer was formed on the non-antiglare-treated surface of Sample 21 explained above. The low reflective layer was formed according to the method described in Example 1 explained above.
As a result, a front plate (hereinafter referred to as "Sample 23") was manufactured.

(Example 24)

A low reflective layer was formed on the non-antiglare-treated surface of Sample 22 explained above. The low reflective layer was formed according to the method described in Example 1 explained above.
As a result, a front plate (hereinafter referred to as "Sample 24") was manufactured.
Table 1 below summarizes the configuration of each sample.

[Table 1]

| Sample | Support Body | Antiglare layer Matting agent : Clearing Agent (Ratio by weight) | Low reflective layer | Clarity T | Diffusion R |
|---|---|---|---|---|---|
| 1 | Polycarbonate | 65 : 35 | Yes | 0.607 | 0.957 |
| 2 | Polycarbonate | 70 : 30 | Yes | 0.59 | 0.949 |
| 3 | Polycarbonate | 75 : 25 | Yes | 0.56 | 0.966 |
| 4 | Polycarbonate | 5 : 95 | Yes | 0.909 | 0.759 |
| 5 | Polycarbonate | 15 : 85 | Yes | 0.814 | 0.892 |
| 6 | Polycarbonate | 30 : 70 | Yes | 0.778 | 0.922 |
| 7 | Polycarbonate | 60 : 40 (Resin fine particles are used) | Yes | 0.752 | 0.851 |
| 8 | Polycarbonate | 7.5 : 92.5 (Resin fine particles are used) | Yes | 0.649 | 0.896 |
| 11 | Polycarbonate | 65 : 35 | No | 0.604 | 0.82 |
| 12 | Polycarbonate | 70 : 30 | No | 0.601 | 0.848 |
| 13 | Polycarbonate | 75 : 25 | No | 0.569 | 0.86 |
| 14 | Polycarbonate | 5 : 95 | No | 0.964 | 0.187 |
| 15 | Polycarbonate | 15 : 85 | No | 0.84 | 0.548 |
| 16 | Polycarbonate | 30 : 70 | No | 0.833 | 0.553 |
| 17 | Polycarbonate | 60 : 40 (Resin fine particles are used) | No | 0.722 | 0.754 |
| 18 | Polycarbonate | 7.5 : 92.5 (Resin fine particles are used) | No | 0.525 | 0.804 |
| 21 | Acryl (Antiglare-treated) | NIL | No | 0.778 | 0.667 |
| 22 | Acryl (Antiglare-treated) | NIL | No | 0.984 | 0.061 |
| 23 | Acryl (Antiglare-treated) | NIL | Yes | 0.774 | 0.709 |
| 24 | Acryl (Antiglare-treated) | NIL | Yes | 0.985 | 0.099 |

(Evaluation 1)

Each sample was evaluated for the clarity T and the diffusion R according to the method described above.

Table 1 above summarizes the values of the clarity T and the diffusion R obtained for each sample.

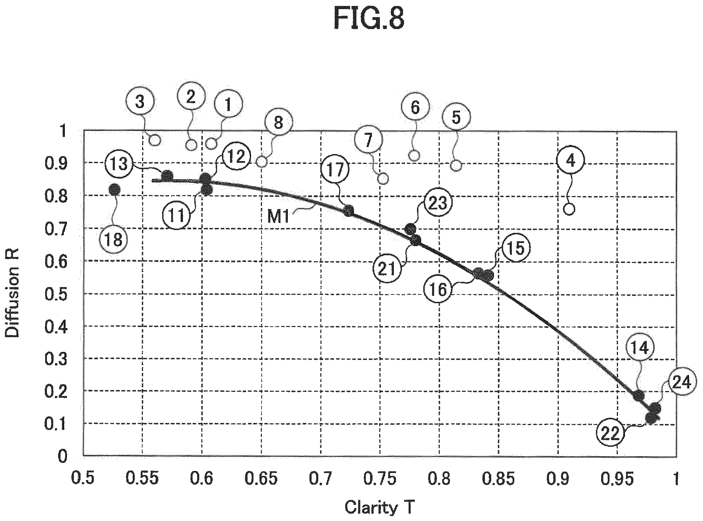

FIG. 8 is a graph illustrating the relationship between the clarity T and the diffusion R obtained for each sample. In FIG. 8, the horizontal axis denotes the clarity T, and the vertical axis denotes the diffusion R. Circled numbers in the graph represent the numbers of Samples. In FIG. 8, the curve M1 illustrated in FIG. 3 is also drawn for reference.

From FIG. 8, it can be understood that, in Samples 11 to 17, the relationship between the clarity T and the diffusion R (hereinafter referred to as "T-R plots") was on or near the curve M1 described above, i.e., included in the "conventional region". In contrast, it can be understood that, in Samples 1 to 7, all of the T-R plots were located in the upper right region with respect to the curve M1, i.e., the improved region.

As described above, it has been shown that Samples 1 to 7 provided one of a high degree of clearness of a display image and a high anti-glare effect.

Here, Sample 1 and Sample 11 were different in the presence or absence of the low reflective layer, but had the same configuration other than that. The same applies to: Sample 2 and Sample 12; Sample 3 and Sample 13; and Sample 7 and Sample 17.

From the comparison of the measurement results of these Samples, it may be considered that, in some sense, the T-R plot could be shifted to the improved region by simply providing the low reflective layer on the front plate having the antiglare layer.

However, from FIG. 8, it can be understood that, in Sample 23 made by forming the low reflective layer on Sample 21 of which T-R plot was located in the conventional region, the T-R plot still remained in the conventional region. The same applies to Sample 24 made by forming the low reflective layer on Sample 22 of which T-R plot was located in the conventional region.

In view of the above, it can be said that, by simply providing a low reflective layer on a conventional front plate made of acryl, the T-R plot does not shift to the improved region. In other words, it is considered that the shift of the T-R plot from the conventional region to the improved region occurs only when the antiglare layer and the low reflective layer are appropriately combined on the front plate.

(Example 31)

In Sample 4 explained above, the second low reflective layer was formed on the antiglare layer.

The second low reflective layer had the same structure as the first low reflective layer and was formed according to a method similar to the first low reflective layer.

Using the above, a front plate (hereinafter referred to as "Sample 31") was manufactured.

(Example 32)

In Sample 5 explained above, the second low reflective layer was formed on the antiglare layer.

The second low reflective layer had the same structure as the first low reflective layer and was formed according to a method similar to the first low reflective layer.

Using the above, a front plate (hereinafter referred to as "Sample 32") was manufactured.

(Example 33)

In Sample 6 explained above, the second low reflective layer was formed on the antiglare layer.

The second low reflective layer had the same structure as the first low reflective layer and was formed according to a method similar to the first low reflective layer.

Using the above, a front plate (hereinafter referred to as "Sample 33") was manufactured.

(Evaluation 2)

Samples 31 to 33 were evaluated for the following evaluation tests.

(Haze measurement)

The hazes of Samples 31 to 33 were measured using a haze meter.

(Evaluation of contrast ratio)

The contrast ratio of each sample was evaluated according to the following method.

Sample was placed on a liquid crystal display apparatus so that the first low reflective layer faced the liquid crystal display apparatus.

Next, the liquid crystal display apparatus was turned on, and a white image was displayed by the liquid crystal display apparatus with a surface illumination of 230 lux. In this state, the luminance (hereinafter referred to as "luminance 1") on the second low reflective layer side of Sample was measured. Next, a black image was displayed by the liquid crystal display apparatus with a surface illuminance of 230 lux. In this state, the luminance on the second low reflective layer side of Sample (hereinafter referred to as "luminance 2") was measured.

The contrast ratio was evaluated from the ratio of the luminance 1 and the luminance 2 obtained.

Table 2 below summarizes the results obtained from Sample.

[Table 2]

| SAMPLE | HAZE | CONTRAST RATIO |
|---|---|---|
| 31 | 0.83 | 5.0 |

(continued)

| SAMPLE | HAZE | CONTRAST RATIO |
|--------|------|----------------|
| 32 | 3.22 | 4.7 |
| 33 | 7.53 | 4.8 |

In general, the contrast ratio of a conventional front plate made of acrylic resin is known to be about 3.0. Therefore, it was found that Sample 31 to Sample 33 all had a better contrast ratio as compared to the conventional.

Thus, it was confirmed that the visibility of the image was enhanced in the front plate having the structure as illustrated in FIG. 5 explained above.

This application claims the priority based on Japanese Patent Application No. 2017-142187 filed on July 21, 2017, the entire contents of which are incorporated herein by reference.

REFERENCE SIGNS LIST

| | |
|---|---|
| 10 | measuring apparatus |
| 25 | light source |
| 27 | detector |
| 32 | first light |
| 34 | transmitted light |
| 50 | sample |
| 52 | first surface |
| 54 | second surface |
| 60 | measuring apparatus |
| 65 | light source |
| 67 | detector |
| 72 | second light |
| 74 | reflected light |
| 100 | first front plate |
| 102 | first side |
| 104 | second side |
| 110 | support body |
| 112 | first surface |
| 114 | second surface |
| 120 | low reflective layer |
| 130 | antiglare layer |
| 132 | matrix |
| 134 | particles |
| 200 | second front plate |
| 202 | first side |
| 204 | second side |
| 210 | support body |
| 212 | first surface |
| 214 | second surface |
| 220 | low reflective layer |
| 230 | antiglare layer |
| 232 | matrix |
| 234 | particles |
| 240 | second low reflective layer |
| 300 | third front plate |
| 302 | first side |
| 304 | second side |
| 310 | support body |
| 312 | first surface |

314     second surface
320     low reflective layer
330     antiglare layer
332     matrix
334     particles
340     second low reflective layer
350     louver layer


**Claims**

1.  A front plate for a display apparatus comprising:

    a support body that is transparent and that has first and second surfaces;
    a low reflective layer disposed on a same side as the first surface of the support body; and
    an antiglare layer disposed on a same side as the second surface of the support body,
    wherein the antiglare layer includes particles having an average diameter of 1 μm to 10 μm dispersed in a resin matrix.

2.  The front plate according to claim 1, wherein the particles include at least one of a silica particle and a resin particle.

3.  The front plate according to claim 1 or 2, wherein the low reflective layer includes a multilayer film in which two types of films having different refractive indexes are alternately stacked once or two or more times.

4.  The front plate according to any one of claims 1 to 3, further comprising:
    a second low reflective layer disposed on a surface of the antiglare layer facing away from the support body.

5.  The front plate according to any one of claims 1 to 4, wherein the support body is made of plastic.

6.  The front plate according to any one of claims 1 to 5, wherein the support body has a thickness in a range of 0.2 mm to 1 mm.

7.  The front plate according to any one of claims 1 to 6, wherein an image is printed on at least one of the first surface and the second surface of the support body.

8.  The front plate according to any one of claims 1 to 7, wherein a layer having a louver function is disposed on the second surface of the support body.

9.  The front plate according to any one of claims 1 to 8, wherein the display apparatus is an in-vehicle display apparatus.

# FIG.1

$\theta = 0°$

# FIG.2

# FIG.3

EP 3 657 476 A1

# FIG.4

100

104

130

134
132
114
110
112
120

102

# FIG.5

200

204

240

234
232
214
210
212
220

202

# FIG.6

# FIG.7

# FIG.8

EP 3 657 476 A1

## INTERNATIONAL SEARCH REPORT

| International application No. |
| --- |
| PCT/JP2018/020065 |

**A. CLASSIFICATION OF SUBJECT MATTER**
Int. Cl. G09F9/00(2006.01)i, G02B5/02(2006.01)i, G02F1/1335(2006.01)i

According to International Patent Classification (IPC) or to both national classification and IPC

**B. FIELDS SEARCHED**

Minimum documentation searched (classification system followed by classification symbols)
Int. Cl. G09F9/00, G02B5/02, G02F1/1335

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2001-343501 A (NISSHA PRINTING CO., LTD.) 14 December 2001, paragraphs [0002], [0028]-[0079], fig. 1, 2 (Family: none) | 1-3, 5-6, 9<br>4, 7-8 |
| Y | JP 5-278157 A (NISSHA PRINTING CO., LTD.) 26 October 1993, paragraphs [0004]-[0018], fig. 3 (Family: none) | 4 |
| Y | WO 2016/006538 A1 (ASAHI GLASS CO., LTD.) 14 January 2016, paragraphs [0122]-[0124] & US 2017/0174565 A1, paragraphs [0179]-[0181] & CN 106488887 A & TW 201605756 A | 7 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09.07.2018 | 17.07.2018 |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**EP 3 657 476 A1**

**INTERNATIONAL SEARCH REPORT**

| | International application No. |
|---|---|
| | PCT/JP2018/020065 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-25959 A (BRIDGESTONE CORP.) 04 February 2010, paragraphs [0021]-[0033], fig. 1-4 (Family: none) | 8 |
| A | JP 2008-65298 A (THE FURUKAWA ELECTRIC CO., LTD.) 21 March 2008, entire text, all drawings (Family: none) | 1-9 |
| A | JP 2016-41481 A (ASAHI GLASS CO., LTD.) 31 March 2016, entire text, all drawings (Family: none) | 1-9 |
| A | JP 2010-102186 A (SUMITOMO CHEMICAL CO., LTD.) 06 May 2010, entire text, all drawings (Family: none) | 1-9 |
| A | JP 2003-215303 A (DAINIPPON PRINTING CO., LTD.) 30 July 2003, entire text, all drawings (Family: none) | 1-9 |
| A | WO 2016/181983 A1 (ASAHI GLASS CO., LTD.) 17 November 2016, entire text, all drawings & US 2018/0038995 A1 & DE 112016002132 T & CN 107615100 A & TW 201706628 A | 1-9 |

Form PCT/ISA/210 (continuation of second sheet) (January 2015)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017142187 A